# EUROPEAN PATENT APPLICATION

(11) **EP 4 467 932 A1**
(43) Date of publication of application: **27.11.2024**
(21) Application number: 23174449.1
(22) Date of filing: 22.05.2023
(51) Int. Cl.: G01D 5/244

(54) **MEASUREMENT DEVICE**

(71) Applicant: Renishaw PLC, Wotton-under-Edge, Gloucestershire GL12 8JR (GB)
(72) Inventor: The designation of the inventor has not yet been filed
(74) Representative: Phillips, Patrick James

(57) **Abstract**

An encoder module (100) for mounting onto a machine so as to measure relative displacement of first and second parts of the machine and a method of setting up an encoder module. The encoder module comprises a scale (202), a mount (302) and a readhead (300) comprising a guided scale signal receiver (304) coupled to the mount (302). The encoder module (100) is configured to determine and output information indicative of the relative positional relationship between the mount (302) and the guided scale signal receiver (304).

## Description

This invention relates to an encoder apparatus. For instance, the invention relates to what is commonly known as a guided encoder, also commonly known as an integral bearing encoder.

Encoders are used in many industries to provide position (or its derivatives, e.g. velocity and/or acceleration) feedback to a control system of a machine, e.g. feedback control for the position/motion of one part of a machine relative to another part of the machine. As will be understood, typically a scale is provided on one part of the machine and a readhead for reading the scale is provided on the other part of the machine such that the relative position of scale and readhead, and hence the relative position of the machine parts, can be detected by the readhead along the encoder's measurement dimension.

There are many configurations in which the scale and readhead of an encoder are arranged. For example, a scale signal receiver of a readhead could be configured so as to be biased/bear against the scale and/or the part of a protective housing to which the scale may be attached. Accordingly, the sealed encoder module could comprise "integral bearings" (and hence be what is known as an "integral bearing", or "guided" encoder module). Other examples of integral bearing / guided encoders include embodiments where a bearing is located between a scale signal receiver (or part to which a scale signal receiver has a fixed relationship) _of a readhead and a scale or part having a fixed relationship with a scale. However, this need not necessarily be the case and encoder need not be integral bearing encoders / guided encoders. For example, the arrangement of the scale signal receiver inside the protective housing could be independent of the scale and protective housing. Accordingly, the encoder module could be described as being "without integral bearing", or as being a "bearingless" encoder module.

The technologies utilised by encoders can require that the environment in which they are used is clean and free of contamination, e.g. dust, dirt and moisture (which could, for example, be oil and/or water based). Contamination on the scale and/or readhead can adversely affect the performance of the encoder. In many industries such machines that use encoders operate in an appropriately clean environment, in which case what is commonly referred to as an "exposed encoder" (or "open encoder") can be used.

However, there are instances, such as in the machine tool industry for example, where the working environment is not clean, and where fluids and solid debris are prevalent. In such cases there can exist the need to protect the scale and readhead of an encoder against such detrimental environments. Typically, in these circumstances, a type of encoder is used which is commonly referred as a sealed (also known as enclosed) encoder. Such sealed/enclosed encoders comprise a scale and a readhead, with an integral protective housing which encapsulates the scale and at least a scale signal receiving part of the readhead, and which together are provided and installed as a single module. Enclosed encoders can be either guided encoders or bearingless encoders.

WO 2017/093738 discloses an enclosed encoder where a readhead receives a scale signal and outputs diagnostic information regarding the scale signal.

The present invention provides an improved encoder apparatus. In particular, the present invention relates to improvements to guided encoders. For instance, according to the present invention there is provided an encoder module comprising a scale, and a readhead comprising a guided scale signal receiver.

According to a first aspect there is provided an encoder module for mounting onto a machine so as to measure relative displacement of first and second parts of the machine, the encoder module comprising, a scale, a readhead comprising a guided scale signal receiver and a mount, wherein the encoder module is configured to determine and output information indicative of the relationship between the mount and the guided scale signal receiver. The encoder module may be a sealed encoder module. The mount may be a mounting block.

Optionally, the information is diagnostic information. The relationship may be a positional relationship. The relationship may be a distance for example a distance between the mount and the guided scale signal receiver (for example a distance along a direction perpendicular to a face of the scale) and/or a lateral distance (orthogonal to the scale measurement direction and a direction perpendicular to a face of the scale). The positional relationship may additionally or alternatively be pitch and/or roll and/or yaw. Optionally the relationship may be radial and/or axial displacement and/or swash.

An integral protective housing may be provided. The integral protective housing may encapsulate at least part of the guided scale signal receiver. The integral protective housing may encapsulate at least part of the mount. The integral protective housing may encapsulate the guided scale signal receiver and at least part of the mount. Optionally the integral protective housing encapsulates at least part of the mount and the whole of the scale signal receiver.

The information indicative of the relationship between the mount and the guided scale signal receiver may comprise information regarding the relationship between the mount and the scale obtained directly and/or indirectly.

The information indicative of the relationship between the mount and the guided scale signal receiver may comprise information regarding the relationship between the mount and the guided scale signal receiver obtained directly and/or indirectly.

The information indicative of the relationship between the mount and the scale may comprise information regarding (i) the relationship between the mount and the scale, and/or (ii) the relationship between the mount and the guided scale signal receiver, and/or (iii) the relationship between the mount and the protective housing.

Providing information indicative of the relationship between the mount and the guided scale signal receiver can allow an optimal alignment of the mount and the scale to be more easily achieved. Optimal alignment of mount and the scale can reduce some of the forces exerted between the scale and the guided scale signal receiver. Reducing some of the forces exerted between the scale and the guided signal receiver can reduce wear of the scale and/or the guiding mechanism / bearings of the guided scale receiver, which can provide for a longer operational lifetime of the encoder module.

Optionally the readhead is configured to determine and output said information.

The encoder module may comprise at least one output device for outputting said information in the form of a human-detectable signal. Said output device may comprise a visual output device. Said output device may be configured to emit an optical signal. Said output device may comprise an acoustic output device. Said output device may be configured to emit an acoustic signal. Said at least one output device may be provided on said readhead, optionally on the mount.

Said mount optionally comprises a mounting external to said protective housing for mounting the mount to one of first and second moveable parts of a machine, and in which said output device is provided on said mount. Alternatively said at least one output device may be provided on said protective housing.

Optionally the protective housing comprises at least one compliant seal through which the readhead can extend so as to allow the guided signal receiver to be mounted to a part of the machine.

The scale may comprise a rotary scale. The encoder module may comprise an optical scale and readhead. The encoder module may comprise a magnetic scale and readhead. The encoder module may comprise a capacitive scale and readhead. The encoder module may comprise an inductive scale and readhead.

Also disclosed is a machine comprising a sealed encoder module according to the first aspect of invention.

According to a second aspect of invention there is provided a method of setting up an encoder module for measuring the relative position of two relatively moveable parts of a machine in a first degree of freedom, the encoder module comprising, a scale, a readhead comprising a guided scale signal receiver coupled to a mount, wherein the encoder module is configured to determine and output information, the method comprising using said information to determine whether the scale signal receiver and the mount are in a desired relative positional relationship in at least one degree of freedom other than the first degree of freedom.

The information may be diagnostic information. The relationship may be a positional relationship. The relationship may be a distance for example a distance between the mount and the guided scale signal receiver (for example a distance along a direction perpendicular to a face of the scale) and/or a lateral distance (orthogonal to the scale measurement direction and a direction perpendicular to a face of the scale). The positional relationship may additionally or alternatively be pitch and/or roll and/or yaw. Optionally the relationship may be radial and/or axial displacement and/or swash.

Optionally an integral protective housing which encapsulates at least the scale and at least part of the scale signal receiver.

Also disclosed is an encoder module for mounting onto a machine so as to measure relative displacement of first and second parts of the machine. The encoder module may comprise a scale and a readhead. Optionally the readhead comprises a guided scale signal receiver and a mount. The encoder module may be configured to determine and output information. The information may be diagnostic information. The information may be indicative of the relationship between the mount and the guided scale signal receiver. The encoder module may be a sealed encoder module. The relationship is optionally a positional relationship.

The invention will now be described by example only in which:
Figure 1 shows example sections through a prior art guided enclosed encoder.
Figure 2 shows a schematic representation of the prior art encoder of Figure 1.
Figure 3 schematically shows a first embodiment of an encoder.
Figure 4 schematically shows a second embodiment of an encoder.
   And
Figure 5 schematically shows a third embodiment of an encoder.

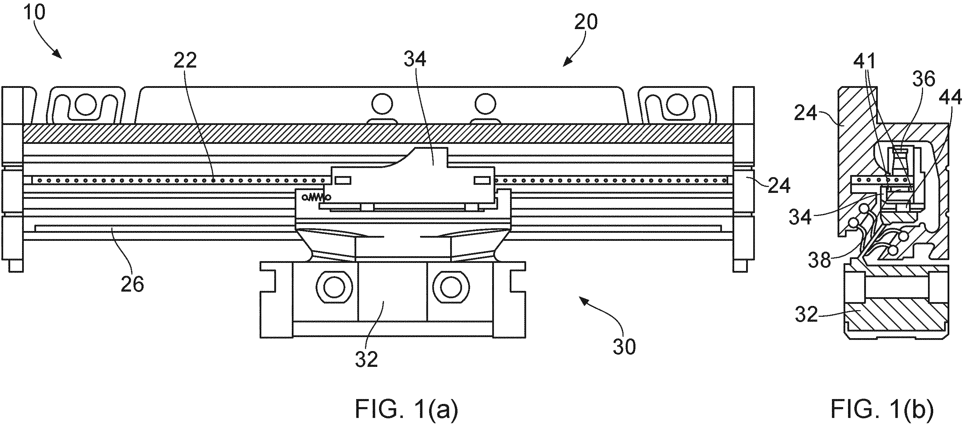

Figure 1 shows a prior art guided encoder 10 comprising a first part 20 for attachment to a first part of a machine and a second part 30 for attachment to a second part of a machine movable relative to the first part in a first direction, i.e. a measurement direction. In this example the guided encoder is an enclosed encoder and the first part 20 comprises a scale 22. The first part 20 further comprises a protective housing 24, and sealing lips 26. The scale 22 is mounted in a fixed relationship to the protective housing, and the protective housing is sealed by sealing lips 26. The scale 22, protective housing 24, and sealing lips 26 all extend in a measurement direction. In the illustrated embodiment the second part 30 is a readhead 30 comprising a mount, which in the current embodiment is in the form of a mounting block 32 and a scale signal receiver 34, in particular a guided scale signal receiver 34. Figure 1(b) shows a light source 36 and a scale signal receiver 38. As can be seen light from light source 36 passes through scale 22 and the signal is received by scale signal receiver 38. Upon passing through the scale 22 the light interacts with the scale, this can be in one of a number of known ways, for example encoders based on diffraction, shadow casting, imaging, induction, capacitive, and magnetic effects are well known to the skilled person, as are other methods of operating an encoder. Also shown in Figure 1(b) is a first spring 44 which biases the guided scale signal receiver 34 against the scale 22 via bearings 41. In this embodiment the bearings 41 are shown located on the on the same side of the scale as mounting block 32.

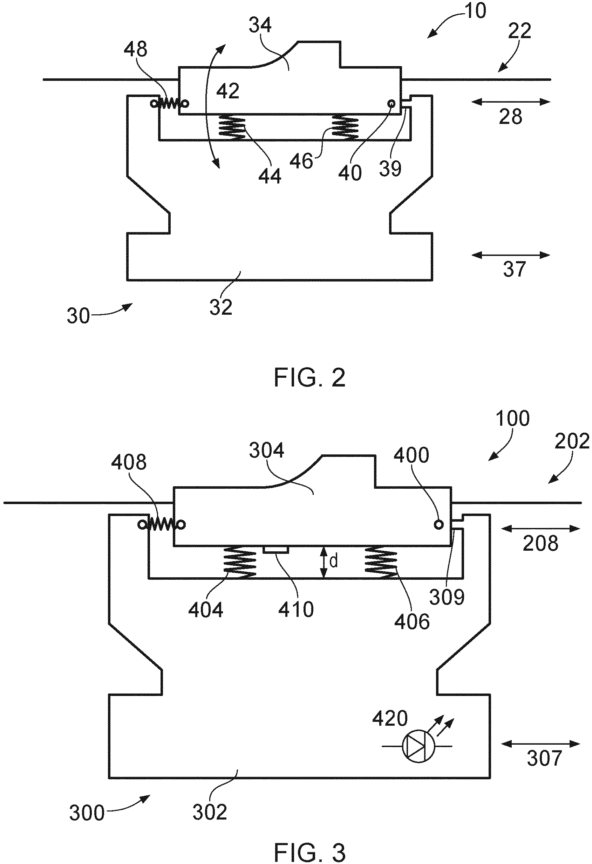

Referring to Figure 2 there is show a schematic representation of the prior art encoder of Figure 1. The scale 22 extends in a scale direction represented by the arrow 28 and the scale signal receiver 34 is mounted on the scale 22 by a number of bearings (bearings 41, Figure 1(b)) which allow the signal receiver 34 to move relative to the scale 22 in the direction 28 while maintaining a fixed relationship with the scale in other directions. The readhead 30 which is for mounting to a second part of a machine is intended to move relative to the scale in a direction illustrated by arrow 37. In use, the mounting block 32 of the readhead 30 is attached to a second part of a machine which moves the readhead 30 relative to the scale 22 in a direction 37. This causes the scale signal receiver 34 of the readhead to move relative to the scale the scale 22 in the direction 28 due to relative movement of the mounting block 32 and the scale 22.

While it is desirable for the directions 28 and 37 to be parallel, this may not always be the case and slight deviations from parallel may be introduced, which can be related to the movement of the first and second parts of the machine to which the encoder apparatus is mounted. In order to mitigate the effects of deviations in the directions 28 and 37 the scale signal reader 34 is able to move relative to the mounting block 32 by pivoting about a point 40 in the direction indicated by arrow 42. In order to allow the pivoting in the direction 42, in the illustrated embodiment a part 39 of the mounting block 32 extends into and is pivotally mounted to the scale signal receiver 34 at point 40. The illustrated embodiment also comprises a first 44 and second 46 springs between the mounting block 32 and the scale signal receiver 34 which can provide a biasing force to bias the scale signal receiver via bearings onto scale 22. A third spring 48 is also fixed to the mounting block 32 and the scale signal receiver 34.

As will be understood, the relationship between the scale and the scale signal receiver of the device shown in Figure 1 can be fixed in a first direction by springs 44, 46 biasing the scale signal receiver 34 against the scale 22. Diagnostic information (such as disclosed in WO 2017/093738) regarding a detected scale signal which indicates a change in the relationship between the scale and the scale signal receiver can be used to detect damage or wear to the scale and/or the scale signal receiver. Once damage or wear has been detected, in order to ensure accurate measurement, the encoder (or part thereof) can be replaced.

Replacing the encoder, or part of the encoder can mean that a machine is out of action for a prolonged period of time and incurs expense of purchasing and fitting replacement parts.

Figure 3 schematically shows a first embodiment of an encoder 100 according to the invention. The embodiment shown in Figure 3 is similar to the embodiments shown in Figure 1 and 2 and briefly comprises a scale 202 extending in a scale measurement direction 208, and a readhead 300. The readhead 300 comprises a mounting block 302 and a scale signal receiver 304. The readhead 300 is moveable in a direction 307 relative to the scale 202 (substantially parallel to direction 208 in which the scale 202 extends), this can be achieved by mounting the scale 202 to a first part of a machine and the readhead 300 to a second part of a machine (via mounting block 302) where the first and second parts of the machine move relatively to each other. The guided scale signal receiver 304 is mounted to the mounting block via a part 309 of the mounting block which extends into and which is pivotally mounted to the scale signal receiver 304 at point 400 and first 404, second 406, and third 408 springs.

During use and when setting up the embodiment shown in Figure 3, the scale signal receiver 304 is in contact with the scale 202 via bearings (similar to bearings 41 in Figure 1(b)) such that the scale signal receiver 304 can move relative to the scale 202 in scale measurement direction 208 while movement of the scale signal receiver 304 relative to the scale 202 is restrained in other directions. This allows the positional relationship between the scale 202 and the scale signal receiver 304 to be substantially constant in directions which are not the scale measurement direction 208. The pivot 400 and first 404, second 406, and third 408 springs allow the scale signal receiver 304 to move relative to the mounting block 302.

When the embodiment shown in Figure 3 is attached to a machine (when the encoder is being set-up) the scale 202 is attached to a first part of a machine, the scale 202 could be located within a protective housing (not shown) where the protective housing is mounted to the first part of the machine. The mounting block 302 is attached to a second part of a machine. Once mounted, the mounting block 302 and scale signal receiver 304 will have a particular relationship (dependent on the relationship of the first part of the machine, the second part of the machine, and how the scale signal receiver 304 and mounting block 302 have been mounted). Figure 3 shows a distance d, being the distance between the mounting block 302 and the scale signal receiver 304. If the mounting block 302 is located closer than optimal to the scale 202 then the first 404 and second 406 springs can exert a force on the scale signal receiver 304 which can cause the bearings (for example bearing similar to bearing 41 shown in Figure 1(b)) of the scale signal receiver 304 to exert a larger than desirable force on the scale 202 (on the side of the scale on which the mounting block 302 is located). This can cause increased wear of the scale. Conversely, if the mounting block 302 is located farther away than optimal from the scale 202 then the bearings may not sufficiently contact the scale, this can cause the signal falling on photodetectors of the guided scale signal receiver to deviate from the expected signal and can introduce errors due to the way the signals are interpreted.

In order that the guided scale signal receiver 304 be located optimally relative to the scale 202 for all positions of the readhead 300 along the scale 202, the mounting block 302 needs to be located close enough to the guided scale signal receiver 304 such that the guided scale signal receiver 304 is biased against the scale 202 to make sufficient contact but without exerting a force larger than desirable for all positions of the readhead 300 along the scale 202. For this to occur, the direction 307 in which the readhead 300 moves needs to be substantially parallel to the direction 208 in which the scale 202 extends. If the direction 307 and the direction 208 are not parallel, then the distance between the mounting block 302 of the readhead 300 and the guided scale signal receiver 304 will not be constant along the length of the scale 202. This leads to the situation where when the readhead 300 is located at one end of the scale 202 the mounting block 302 is located closer to the guided scale signal receiver 304 than when the readhead 300 is located at the other end of the scale 202. This is sometimes referred to as the encoder having a "tight end" (where the mounting block 302 is relatively close to the guided scale signal receiver 304) and a "loose end" (where the mounting block 302 is relatively further away from the guided signal receiver 304).

In order for the encoder 100 to operate optimally, the mounting block 302 should be located a distance away from the scale 202 that is within an optimal range for all locations of the readhead 300 along the scale 202. This will mean that the distance d between the mounting block 302 and the guided scale signal receiver 304 is within an optimal range for all locations of the readhead 300 along the scale 202.

In order to enable positioning the mounting block 302 an optimal distance from the guided scale signal receiver 304, the embodiment shown in Figure 3 is provided with a device for measuring distance d, in this embodiment the distance measuring device for measuring the distance d is a capacitive gap measurement device 410 located on the scale signal receiver 304. The capacitive gap measurement device 410 can determine and output information indicative of the relationship between the mounting block 302 and the scale signal receiver 304. The readhead 300 is provided with a human-detectable signal output device which in the current embodiment is in the form of an LED 420 located on the mounting block 302. Based on the output from the capacitive gap measurement device 410 the LED 420 outputs a signal. In this embodiment the LED 420 emits a first colour when d is at an optimal value or within an optimal range, a second colour when d is smaller than an optimum distance (i.e. when mounting block 302 is closer to scale signal receiver 304 than desirable), and a third colour when d is larger than an optimum distance (i.e. when mounting block 302 is farther away from scale signal receiver 304 than desirable). This can allow a person setting up the encoder by mounting the scale 202 and readhead 300 to first and second parts of a machine to be able to easily identify if the relationship between the mounting block 302 and the scale signal receiver 304 remains in an optimal range for all positions of the readhead 300 along the length of scale 202, and so can help ensure damage and/or wear is reduced.

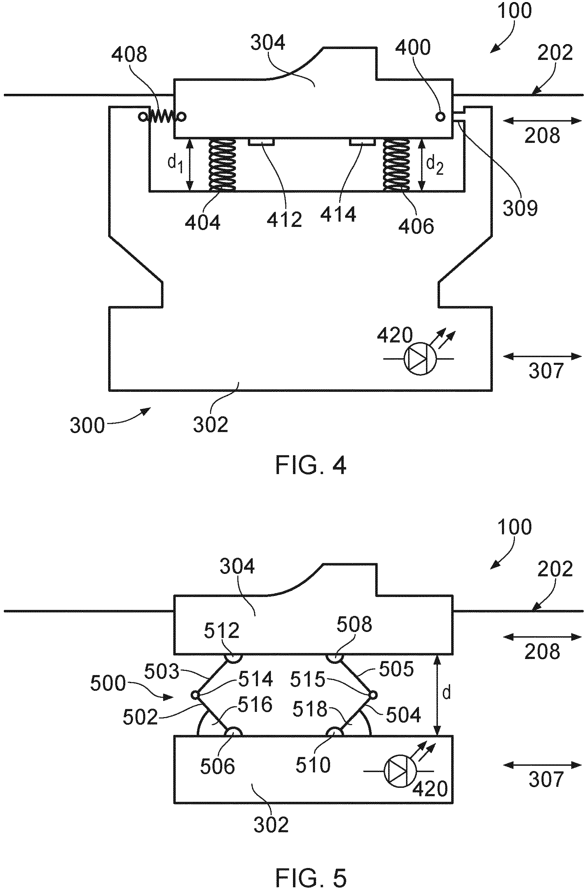

Figure 4 schematically shows a second embodiment of an encoder 100 according to the invention. The encoder shown in Figure 4 is similar in construction to the embodiment shown in Figure 3 and like reference numerals are used for both embodiments. Figure 4 shows a first distance d₁ being the distance between the mounting block 302 and scale signal receiver 304 at or near first spring 404, and a second distance d₂ being the distance between the mounting block 302 and scale signal receiver 304 at or near second spring 406.

It is possible when mounting the scale 202 and the mounting block 302 to first and second parts of a machine that the mounting block 302 may be mounted at an angle to the scale measurement direction, e.g. so that one end of the mounting block 302 is closer to the scale 202 than the other end of the mounting block 302. This can result in a first distance d₁ and a second distance d₂ being unequal. If for example, d₁ is less than d₂, then the force biasing the scale signal receiver 304 against scale 202 provided by the first spring 404 will be greater than the biasing force biasing the scale signal receiver 304 against scale 202 provided by the second spring 406. It is possible for this to occur while the average distance of the scale signal receiver 304 from the mounting block 302 is within an optimal range. It can be undesirable to have an increased biasing force supplied by one of the first 404 or second 406 springs because this can lead to the bearings of the scale signal receiver 304 exerting an increased force on the scale 202 (in this example in the vicinity of the first 404 spring) because this can lead to damage and/or increased wear of the bearings and/or scale 202 which can shorten the life of the encoder.

The embodiment of Figure 4 is equipped with a first 412 and a second 414 capacitive gap measurement devices. The first 412 capacitive gap measurement device measures the distance between the mounting block 302 and the scale signal receiver 304 in the vicinity of the first 404 spring, while the second 414 capacitive gap measurement device measures the distance between the mounting block 302 and the scale signal receiver 304 in the vicinity of the second 406 spring. Using the outputs of the first 412 and second 414 capacitive gap measurement devices it is possible to determine and output information, which may be diagnostic information, indicative of the relationship between the mounting block 302 and the scale signal receiver 304. In the embodiment shown in Figure 4, LED 420 outputs a first signal when d₁ is greater than d₂ and the difference exceeds a threshold value, a second signal when d₁ is less than d₂ and the difference exceeds a threshold value (which may be the same value or a different value used for the first signal), and a third signal when the difference between d₁ and d₂ does not exceed a threshold value (which may be the same value or values used for the first and second signals). The LED 420 can also be used to output a signal indicative of the average distance of the mounting block 302 and the scale signal receiver 304.

While the first 412 and second 414 capacitive gap measurement devices embodiment of Figure 4 are shown spaced apart in the elongate scale direction 208 which allows pitch (i.e. rotation about an axis orthogonal to the directions 208 and d₁) of the mounting block 302 relative to the scale 202 to be ascertained, in other embodiments alternative spacing of the first 412 and second 414 capacitive gap measurement devices are envisaged. For example, the first 412 and second 414 capacitive gap measurement devices may be spaced apart along a direction orthogonal to the direction 208 and di, such an arrangement would allow roll (i.e. rotation about an axis parallel to direction 208) of the mounting block 302 relative to the scale 202 to be ascertained. In other embodiments the first 412 and second 414 capacitive gap measurement devices may be spaced apart both in a direction parallel to direction 208 and in a direction orthogonal to direction 208 and d₁.

While the embodiments shown in Figures 3 and 4 show capacitive gap measurement devices mounted on the scale signal receiver, this need not be the case. In other embodiments a (or more than one) capacitive gap measurement device(s) may be located on the mounting block 302 in order to perform the same function of measuring the distance d (or d₁ and d₂) between the mounting block 302 and the scale signal receiver. In further embodiments, capacitive gap measurement devices need not be used, and a (or more than one) strain gauge may be associated with the first 404 or second 406 spring (or both the first 404 and second 406 spring) in order to provide information regarding the distance d (or d₁ and d₂).

Figure 5 schematically shows a third embodiment of an encoder 100 according to the invention. Figure 5 shares some constructional features with the embodiments shown in Figures 3 and 4 and like reference numerals are used for both embodiments.

In the embodiment of Figure 5 a mounting block 302 is coupled to the scale signal receiver 304 via an articulated link 500, in this embodiment the articulated link is shown as a scissor type mechanism. The articulated link 500 in the illustrated scissor type mechanism comprises a first 502 and a second 504 rods pivotally mounted to the mounting block 302 at points 506 and 510 respectively. The articulated link 500 further comprises first 503 and second 505 rods pivotally mounted to the scale signal receiver 304 at points 512 and 508 respectively. Rod 502 and rod 503 are pivotally connected to each other at point 514. Rod 504 and rod 505 are pivotally connected to each other at point 515 The articulated link 500 allows the mounting block 302 and the scale signal receiver 304 to move relative to each other as the scale signal receiver 304 moves in the measurement direction 208 and the mounting block 302 moves in the direction 307 so that a distance between the mounting block 302 and scale signal receiver 304 perpendicular to the plane in which the scale 202 extends can vary in order to reduce or prevent damage to the scale and/or the scale signal receiver 304. The embodiment of Figure 5 may comprise a biasing mechanism (not shown) for biasing the guided scale signal receiver 304 against the scale 202. The biasing mechanism could comprise a spring as part of the articulation mechanism 500. For example, the biasing mechanism could comprise a first tortional spring located at point 514 and the second tortional spring located at point 515, the first 514 and second 515 tortional springs configured to bias the mounting block 302 and the guided scale signal receiver 304 apart.

The embodiment of Figure 5 further comprises an angle encoder (often called a rotary encoder) located at point 506 in order to measure angle 516 formed between rod 502 and mounting block 302. From the angle 516 the distance d between the scale signal receiver 304 and the mounting block can be derived. In the illustrated embodiment a second angle encoder is provided at 510 in order to measure angle 518 between the mounting block 302 and the second rod 504. This can allow any tilt of the mounting block 302 with respect to scale measurement direction 208 to be measured.

While the embodiment of Figure 5 is described as having a first angle encoder at point 506 and a second angle encoder at position 510, in other embodiments providing an angle encoder at any one of positions 506, 508, 510, 512, 514, or 515 can allow a distance d to be calculated. In still further embodiments, providing a first angle encoder at any one of positions 506, 512, or 514 and providing a second angle encoder at any one of positions 508, 510, or 515 can allow a distance d and any tilt of the mounting block 302 with respect to scale measurement direction 208 to be measured.

While the embodiments shown in Figures 3, 4 and 5 show a single LED 420 for outputting a signal indicative of the relationship between the mounting block 302 and the scale signal receiver 304, this need not be the case. In a further embodiment, two or more LEDs may be used to provide information about the distance between the between the mounting block 302 and the scale signal receiver 304 and about any tilt of the mounting block 302 relative to the scale signal receiver (based on a discrepancy in the information regarding distances d₁ and d₂). In still further embodiments, the signal need not be provided by an LED but could be an auditory signal, or a haptic signal.

While the above embodiments determine information indicative of the relationship between the mounting block and the guided scale signal receiver directly (for example, by measuring at least one distance between the mounting block and the guided scale signal receiver, or by measuring angles of a linkage mechanism), the invention is not limited to such embodiments, for instance the relationship between the mounting block and the guided signal receiver may be determined indirectly. For example, in some embodiments the scale is provided within a protective housing, in such embodiments the relationship between the scale and the protective housing is known. The relationship between the guided signal receiver and the scale is also know by virtue of the guided nature of the scale signal receiver, thus the relationship between the mounting block and the scale signal receiver can be determined indirectly. In some embodiments one or more capacitive distance sensors (which may be mounted on the mounting block) can be used to determine the relationship between the mounting block and the protective housing, and thus determine information indicative of the relationship between the mounting block and the scale signal receiver, thus the relationship between the mounting block and the scale signal receiver can be determined indirectly. In still further embodiments, the encoder is configured to detect the relationship between the mounting block and the scale, this information can be used to determine the relationship between the mounting block and the scale signal receiver, for example by providing one or more capacitive distance sensors on the mounting block to measure a distance between the mounting block and the scale, thus the relationship between the mounting block and the scale signal receiver can be determined indirectly.

## Claims

1. An encoder module for mounting onto a machine so as to measure relative displacement of first and second parts of the machine, the encoder module comprising, a scale, a readhead comprising a guided scale signal receiver coupled to a mount, wherein the encoder module is configured to determine and output information indicative of the relationship between the mount and the guided scale signal receiver.

2. An encoder module as claimed in claim 1 wherein the information indicative of the relationship between the mount and the guided scale signal receiver comprises information regarding the relationship between the mount and the guided scale signal receiver obtained directly and/or indirectly.

3. An encoder module as claimed in claim 1 or claim 2, in which the readhead is configured to determine and output said information.

4. An encoder module as claimed in any of claims 1 to 3, comprising at least one output device for outputting said information in the form of a human-detectable signal.

5. An encoder module as claimed in claim 4, in which said output device comprises a visual output device.

6. An encoder module as claimed in claim 4, in which said output device comprises an acoustic output device.

7. An encoder module as claimed in any of claims 4 to 6, in which said at least one output device is provided on said readhead, optionally on the mount.

8. An encoder module as claimed in any preceding claim, comprising an integral protective housing which encapsulates at least the scale and at least part of the scale signal receiver.

9. An encoder module as claimed in claim 8 when dependent on any of claims 4 to 7, in which said mount comprises a mounting external to said protective housing for mounting the mount to one of first and second moveable parts of a machine, and in which said output device is provided on said mount.

10. An encoder module as claimed in any of claim 8 when dependent on any of claims 4 to 7, in which said at least one output device is provided on said protective housing.

11. An encoder module as claimed in any of claims 8 to 10, in which the protective housing comprises at least one compliant seal through which the readhead can extend so as to allow the guided signal receiver to be mounted to a part of the machine.

12. An encoder module as claimed in any preceding claims, in which said scale comprises rotary scale.

13. An encoder module as claimed in any preceding claim, comprising an optical scale and readhead.

14. A machine comprising an encoder module according to any preceding claim.

15. A method of setting up an encoder module for measuring the relative position of two relatively moveable parts of a machine in a first degree of freedom, the encoder module comprising, a scale, a readhead comprising a guided scale signal receiver coupled to a mount, wherein the encoder module is configured to determine and output information, the method comprising using said information to determine whether the scale signal receiver and the mount are in a desired relative positional relationship in at least one degree of freedom other than the first degree of freedom.
